(19) Europäisches Patentamt
European Patent Office
Office européen des brevets

(11) **EP 2 331 360 B1**

(12) **EUROPÄISCHE PATENTSCHRIFT**

(45) Veröffentlichungstag und Bekanntmachung des Hinweises auf die Patenterteilung:
**10.04.2013 Patentblatt 2013/15**

(21) Anmeldenummer: **09811099.2**

(22) Anmeldetag: **18.08.2009**

(51) Int Cl.:
**B60K 35/00** (2006.01)     **G06F 3/048** (2013.01)

(86) Internationale Anmeldenummer:
**PCT/EP2009/060675**

(87) Internationale Veröffentlichungsnummer:
**WO 2010/026044 (11.03.2010 Gazette 2010/10)**

(54) **VERFAHREN UND VORRICHTUNG ZUM ANZEIGEN VON INFORMATION, INSBESONDERE IN EINEM FAHRZEUG**

METHOD AND DEVICE FOR DISPLAYING INFORMATION, IN PARTICULAR IN A VEHICLE

PROCÉDÉ ET DISPOSITIF POUR L'AFFICHAGE D'INFORMATIONS, EN PARTICULIER DANS UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.09.2008 DE 102008045603
09.10.2008 DE 102008051051
05.12.2008 PCT/EP2008/066918**

(43) Veröffentlichungstag der Anmeldung:
**15.06.2011 Patentblatt 2011/24**

(73) Patentinhaber: **Volkswagen Aktiengesellschaft
38440 Wolfsburg (DE)**

(72) Erfinder:
• **WÄLLER, Christoph
38106 Braunschweig (DE)**
• **MISSALL, Markus
38102 Braunschweig (DE)**
• **HORSTMANN, Chris
38118 Braunschweig (DE)**
• **MEYER, Oliver
10629 Berlin (DE)**

(74) Vertreter: **Reitstötter - Kinzebach
Patentanwälte
Sternwartstrasse 4
81679 München (DE)**

(56) Entgegenhaltungen:
EP-A- 1 736 856          WO-A-2006/003586
WO-A-2006/126055       DE-A1- 19 941 945
US-A1- 2004 100 479    US-A1- 2004 160 458
US-A1- 2008 052 945

## Beschreibung

Die vorliegende Erfindung betrifft ein Verfahren zum Anzeigen von Information, bei dem von einer Anzeigefläche eine Teilmenge einer Gesamtinformation angezeigt wird, wobei die Größe der angezeigten Teilmenge von einem Vergrößerungsfaktor abhängt, mit dem die Teilmenge auf der Anzeigefläche angezeigt wird, und die angezeigte Teilmenge der Gesamtinformation durch einen Bedienvorgang eines Nutzers verändert wird, wobei die Größe der Veränderung der angezeigten Information von dem Bedienvorgang und von dem Vergrößerungsfaktor der angezeigten Information, insbesondere von der Länge einer Bedienbewegung des Bedienvorgangs und/oder einer Bediendauer des Bedienvorgangs und von dem Vergrößerungsfaktor der angezeigten Information, abhängt. Die Information wird bei dem Verfahren insbesondere in einem Fahrzeug angezeigt. Die erfindungsgemäße Vorrichtung zum Anzeigen von Information umfasst eine Anzeigevorrichtung mit einer Anzeigefläche, einem Speicher zum Speichern einer Gesamtinformation, von der eine Teilmenge auf der Anzeigefläche anzeigbar ist, wobei die Größe der anzeigbaren Teilmenge von einem Vergrößerungsfaktor abhängt, mit dem die Teilmenge auf der Anzeigefläche angezeigt wird, und eine Bedieneinrichtung, die von einem Nutzer betätigbar ist, um die angezeigte Teilmenge der Gesamtinformation durch einen Bedienvorgang zu verändern, wobei die Größe der Veränderung der angezeigten Information von dem Bedienvorgang und von dem Vergrößerungsfaktor der angezeigten Information, insbesondere von der Länge einer Bedienbewegung des Bedienvorgangs und/oder einer Bediendauer des Bedienvorgangs und von dem Vergrößerungsfaktor der angezeigten Information, abhängt. Die Anzeigefläche der erfindungsgemäßen Vorrichtung ist insbesondere in einem Fahrzeug angeordnet.

In einem Fahrzeug werden herkömmlicherweise verschiedene Informationen angezeigt, die insbesondere betriebsbezogene Daten des Fahrzeugs für den Fahrer visuell darstellen. Des Weiteren können in dem Fahrzeug für den Fahrer verkehrsbezogene Daten dargestellt werden. Für die Anzeige dieser Informationen wurden früher analoge mechanische Anzeigeinstrumente verwendet. Diese waren insbesondere innerhalb des so genannten Kombiinstruments in der Nähe des primären Sichtfelds des Fahrers hinter dem Lenkrad angeordnet. Das Kombiinstrument dient insbesondere der Anzeige der Geschwindigkeit, des Tankinhalts, der Kühlertemperatur und anderer betriebsbezogener Informationen des Fahrzeugs.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Aus diesem Grund werden in Fahrzeugen vielfach Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Die Multifunktionsanzeigen werden in Verbindung mit einem Bediensystem betrieben, welches verschiedene Bedienelemente umfassen kann. In der DE 199 41 956 A1 sind z. B. mehrere Auswahl- und Funktionstasten zur Ansteuerung der Fahrzeugeinrichtungen vorgesehen. In der DE 199 41 960 A1 ist andererseits ein Multifunktionsbedienelement zur Auswahl von Funktionsgruppen und individuellen Funktionen beschrieben, das einen bidirektional drehbaren Zylinder umfasst, der ferner senkrecht zur Rotationsachse bewegbar ist.

Des Weiteren ist aus der EP 0 366 132 B1 eine Multifunktionsbedieneinrichtung bekannt, bei der die Auswahl von Funktionsgruppen und die Auswahl individueller Funktionen mittels eines Drehdrückschalters erfolgt, bei dem der Schalter in Richtung der Drehachse betätigbar ist. Aus der DE 199 44 324 ist eine Multifunktionsbedienvorrichtung bekannt, die einen Drehschalter zur Auswahl von Funktionen aufweist, die innerhalb eines Anzeigefeldes eines Displays darstellbar sind. Um den Drehschalter herum sind Druckschalter angeordnet, denen ebenfalls Anzeigefelder des Displays zugeordnet sind. Schließlich ist aus der DE 103 24 579 A1 eine Bedienvorrichtung zur Steuerung von Fahrzeugeinrichtungen bekannt, die ein berührungsempfindliches Bedienfeld aufweist.

Neben den vorstehend beschriebenen abgesetzten Bedienelementen wurde ferner vorgeschlagen, das Display selbst mit einer berührungsempfindlichen Oberfläche auszustatten und auf diese Weise einen so genannten Touchscreen zur Verfügung zu stellen. Bei einem solchen Touchscreen erfolgt die Bedienung dadurch, dass der Nutzer z. B. mit seiner Fingerspitze den Touchscreen berührt. Die Position der Berührung wird erfasst, ausgewertet und einem Bedienschritt zugeordnet. Um den Nutzer bei der Bedienung zu unterstützen, können auf dem Display virtuelle Schalter als graphische Schaltflächen dargestellt werden. Eine Anzeigevorrichtung mit einer berührungsempfindlichen Oberfläche, die in Verbindung mit einem Navigationssystem eingesetzt wird, ist beispielsweise in der DE 10 2005 020 155 A1 beschrieben.

Für die Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Die Darstellung von Information in einem Fahrzeug erfolgt vielfach dadurch, dass eine Teilmenge einer Gesamtinformation auf der Anzeigefläche in dem Fahrzeug angezeigt wird und der Nutzer die Teilmenge verändern kann. Die Gesamtinformation kann beispielsweise eine Liste mit einer Vielzahl von Listeneinträgen betreffen. Von der Gesamtliste wird eine Teilmenge der Listeneinträge angezeigt. Durch einen Bedienvorgang kann der Nutzer einen Bildlauf (Scrollen) hervorrufen, um andere Listeneinträge zur Anzeige zu bringen. Bei dem Bedienvorgang kann der Nutzer beispielsweise eine Bedienbewegung einer bestimmten Länge ausführen. Ferner kann der Nutzer beispielsweise ein Bedienelement für eine bestimmte Bediendauer betätigen. Die Größe bzw. das Maß der Veränderung der angezeigten Information, d. h. in diesem Fall die Anzahl der Positionen, um die sich die Listeneinträge, die angezeigt werden, verändern, hängt in diesem Fall von der Länge der Bedienbewegung bzw. der Bediendauer ab. Ferner hängt die Größe dieser Veränderung von dem Vergrößerungsfaktor ab, mit welchem die Liste dargestellt wird. Werden nämlich in einem bestimmten Anzeigebereich z. B. vier Listeneinträge wiedergegeben, ist die Veränderung der angezeigten Information bei einer bestimmten Länge der Bedienbewegung bzw. einer bestimmten Bediendauer kleiner als bei dem Fall, bei dem für den Bedienvorgang sechs Listeneinträge in dem entsprechenden Anzeigebereich wiedergegeben werden. Insbesondere wenn die Länge einer Bedienbewegung bestimmt, wie groß die Veränderung der Liste ist, ist der Bedienvorgang für den Nutzer besonders intuitiv, da die dargestellte Liste durch die Bedienbewegung in eine bestimmte Richtung bewegt wird, wobei bei einem größeren Vergrößerungsfaktor sich die Position der angezeigten Listeneinträge weniger verändert als bei einem kleineren Vergrößerungsfaktor.

Es wird darauf hingewiesen, dass sich der Vergrößerungsfaktor auf einen beliebig wählbaren Grunddarstellungsmaßstab bezieht. Der Vergrößerungsfaktor kann größer als, kleiner als oder gleich eins sein, so dass er auch Verkleinerungen relativ zu dem Grundmaßstab umfasst.

Umfasst die Gesamtinformation eine sehr große Datenmenge wie z. B. eine sehr lange Liste mit vielen Listeneinträgen oder eine geographische Karte, ergibt sich das Problem, dass der Bedienvorgang für einen Bildlauf zu sehr entfernt liegenden Listeneinträgen oder Bereichen der Karte ein hohes Maß an Zeit und Aufmerksamkeit vom Nutzer abverlangt. Dies ist jedoch, wie vorstehend erläutert, bei der Anwendung in einem Fahrzeug nachteilig.

Es ist daher die Aufgabe der vorliegenden Erfindung, ein Verfahren und eine Vorrichtung der eingangs genannten Art bereitzustellen, mit denen auf einfache und für den Nutzer intuitive Weise eine Veränderung der angezeigten Teilmenge der Gesamtinformation so erfolgen kann, dass der hierfür erforderliche Bedienvorgang so schnell wie möglich durchgeführt werden kann und vom Nutzer ein möglichst geringes Maß an Aufmerksamkeit abverlangt.

Diese Aufgabe wird erfindungsgemäß durch ein Verfahren mit den Merkmalen des Anspruchs 1 und eine Vorrichtung mit den Merkmalen des Anspruchs 11 gelöst. Der Oberbegriff dieser Ansprüche ist aus der US 2004/160458 A1 bekannt. Vorteilhafte Aus- und Weiterbildungen ergeben sich aus den Unteransprüchen.

Bei dem Verfahren verändert sich der Vergrößerungsfaktor für den Bedienvorgang in Abhängigkeit von einer Bediensituation. Der Vergrößerungsfaktor wird insbesondere verkleinert, so dass sich eine stärkere Veränderung der angezeigten Information bei einem ansonsten gleichen Bedienvorgang, d. h. insbesondere bei gleicher Länge der Bedienbewegung bzw. gleicher Bediendauer, ergibt.

Bei dem erfindungsgemäßen Verfahren wird insbesondere während des Ausführens des Bedienvorgangs der Vergrößerungsfaktor der angezeigten Teilmenge verändert, so dass sich die Größe der von dem Bedienvorgang induzierten Veränderung der angezeigten Information verkleinert oder vergrößert. Eine Verkleinerung des Vergrößerungsfaktors führt zu einer stärkeren Veränderung der angezeigten Information, eine Vergrößerung des Vergrößerungsfaktors führt zu einer geringeren Veränderung der angezeigten Information.

Die Größe der Veränderung der angezeigten Information ist insbesondere mit der Geschwindigkeit der Veränderung der angezeigten Teilmenge der Gesamtinformation korreliert. Bei einem kleinen Vergrößerungsfaktor, d. h. einer kleineren Darstellung einer bestimmten Informationsmenge, wird diese bei dem Bedienvorgang stärker bzw. schneller verändert als bei einem größeren Vergrößerungsfaktor, d. h. bei einer größeren Darstellung einer bestimmten Informationsmenge bei dem gleichen Bedienvorgang. Bei dem erfindungsgemäßen Verfahren kann die angezeigte Teilmenge der Gesamtinformation somit dadurch schneller verändert werden, dass durch die Bediensituation automatisch für den Bedienvorgang der Vergrößerungsfaktor der angezeigten Information verkleinert wird.

Bei herkömmlichen Bedienvorgängen ist die Geschwindigkeit, mit der sich die angezeigte Teilmenge der Gesamtinformation auf eine Eingabe eines Nutzers ändert, konstant. Ferner ist es möglich, dass der Nutzer die Geschwindigkeit erhöhen kann, indem er eine Bedieneinrichtung für eine gewisse Zeit dauerhaft und ununterbrochen betätigt. Diese Art und Weise die Geschwindigkeit, mit der sich die angezeigte Teilmenge der Gesamtinformation ändert, zu erhöhen, ist insbesondere bei einem Einsatz in einem Fahrzeug nachteilig, da sich die Bediendauer und damit die Ablenkungsgefahr für einen Fahrer, der die Bedieneinrichtung hierfür betätigt, erhöht. Zudem erschweren im Fahrzeug auftretende Erschütterungen und Vibrationen die ununterbrochene Betätigung der Bedieneinrichtung, so dass die Gefahr besteht, dass der Bedienvorgang ungewollt unterbrochen wird.

Bei dem erfindungsgemäßen Verfahren kann der Nutzer die Geschwindigkeit, mit der sich die angezeigte Teilmenge der Gesamtinformation ändert, durch eine Bediensituation verändern, die dazu führt, dass sich der Vergrößerungsfaktor für den Bedienvorgang verändert, insbesondere verkleinert, so dass die Geschwindigkeit erhöht wird. Hierdurch kann somit die Bediendauer erheblich verkürzt werden. Dies liefert einen Beitrag zum sicheren Führen des Fahrzeugs.

Gemäß einer Ausgestaltung des erfindungsgemäßen Verfahrens ist die Gesamtinformation eine Liste mit einer Vielzahl von Listeneinträgen, von denen nur eine Teilmenge angezeigt wird, wobei die Anzahl der Listeneinträge der Teilmenge von dem Vergrößerungsfaktor abhängt. Bei einem Durchlaufen einer langen Liste wird somit bei dem erfindungsgemäßen Verfahren die Listendarstellung in Abhängigkeit von der Bediensituation verkleinert, so dass auf einer bestimmten Anzeigefläche deutlich mehr Listeneinträge angezeigt werden. Die Bedienbewegung bzw. die Bediendauer des Bedienvorgangs führen somit dazu, dass die Liste schneller durchlaufen wird, bzw. die Größe der Veränderung der angezeigten Information pro Zeiteinheit stärker verändert wird.

Wird somit bei dem Verfahren mittels des Bedienvorgangs ein Bildlauf durch die Listeneinträge erzeugt, wird bei einer Verkleinerung des Vergrößerungsfaktors während des von dem Bedienvorgang induzierten Bildlaufs eine größere Menge von Listeneinträgen angezeigt, so dass eine schnellerer Bildlauf erzeugt wird.

Gemäß einer weiteren Ausgestaltung des erfindungsgemäßen Verfahrens stellt die Gesamtinformation eine geographische Karte dar, von der nur ein Teilbereich angezeigt wird, wobei der Kartenmaßstab vom Vergrößerungsfaktor abhängt. Eine derartige Darstellung einer geographischen Karte erfolgt insbesondere in Verbindung mit einem Navigationssystem des Fahrzeugs. Der Nutzer kann nun durch den Bedienvorgang den Kartenausschnitt verändern. Hierbei wird - bildlich ausgedrückt - der angezeigten Teilbereich über die Gesamtkarte bewegt. Da die Anzeigefläche zur Anzeige des Teilbereichs der Gesamtkarte vorgegeben ist, hängt die Geschwindigkeit, mit welcher der Teilbereich über die gesamte Karte bewegt wird, von dem Kartenmaßstab ab. Bei dem erfindungsgemäßen Verfahren wird für den Bedienvorgang der Kartenmaßstab verkleinert, so dass ein größerer Ausschnitt der geographischen Karte von der Anzeigefläche angezeigt wird und der Ausschnitt damit schneller über die Gesamtkarte bewegt wird. Weit entfernt liegende Bereiche der Karte können hierdurch schneller zur Anzeige gebracht werden.

Wird somit bei dem Verfahren mittels des Bedienvorgangs ein Kartenausschnitt verändert, wird bei einer Verkleinerung des Vergrößerungsfaktors während der von dem Bedienvorgang induzierten Veränderung des Kartenausschnitts die Karteninformation in einem Ausschnitt mit gleicher Abmessung, jedoch in einem kleineren Kartenmaßstab angezeigt, so dass der Kartenausschnitt schneller über die Gesamtinformation der geographischen Karte bewegt wird.

Eine Veränderung, insbesondere Verkleinerung, des Vergrößerungsfaktors für den Bedienvorgang bedeutet insbesondere, das der Bedienvorgang selbst nicht zu der Veränderung des Vergrößerungsfaktors führen muss. Der Bedienvorgang bewirkt beispielsweise, dass ein Bildlauf durch eine Liste durchgeführt oder ein Kartenausschnitt verändert wird. Die Veränderung des Vergrößerungsfaktors kann zwar auch mit dem Bedienvorgang zusammenhängen, wenn die Bediensituation durch den Bedienvorgang bestimmt wird, sie hat jedoch die Funktion, auf den Bedienvorgang Einfluss zu nehmen, nämlich die Größe der Veränderung der angezeigten Information zu variieren. Bei einem Bildlauf durch eine Liste führt die Veränderung des Vergrößerungsfaktors bei einem ansonsten gleichen Bedienvorgang zu einer Veränderung der Bildlaufgeschwindigkeit, bei einer Veränderung eines Kartenausschnitts zu einer Veränderung der Geschwindigkeit, mit welcher der Ausschnitt über die Gesamtkarte bewegt wird. Beispielsweise kann bei einer Verkleinerung des Vergrößerungsfaktors der Listenanzeige um den Faktor zwei, ein Bildlauf bei einer Bedienbewegung von z. B. 1 cm von z. B. zehn Listeneinträgen statt fünf Listeneinträgen erzeugt werden.

Die Größe der Veränderung des Vergrößerungsfaktors hängt von der Bediensituation ab. Ferner ist es möglich, dass der Vergrößerungsfaktor stufenlos verändert wird. Ferner kann der Vergrößerungsfaktor in Stufen verändert werden.

Gemäß einer Ausgestaltung des erfindungsgemäßen Verfahrens wird bei Beendigung des Bedienvorgangs der Vergrößerungsfaktor wieder auf den ursprünglichen Wert zurückgesetzt. Die Veränderung des Vergrößerungsfaktors führt in diesem Fall somit nur dazu, dass die angezeigte Teilmenge der Gesamtinformation schneller verändert werden kann, nicht jedoch zu einer anderen Darstellungsart nach Beendigung des Bedienvorgangs.

Gemäß dem erfindungsgemäßen Verfahren wird die Bediensituation durch den Bedienvorgang bestimmt. Beispielsweise kann der Vergrößerungsfaktor bei einem Bedienvorgang zum Verändern einer angezeigten Teilmenge einer Gesamtinformation immer um ein bestimmtes Maß verändert, insbesondere verkleinert, werden. Des Weiteren kann die Veränderung des Vergrößerungsfaktors für den Bedienvorgang auch von der Art und Weise abhängen, wie der Bedienvorgang vom Nutzer betätigt wird.

Für den Bedienvorgang kann beispielsweise eine Oberfläche der Anzeigefläche oder eine Oberfläche einer Bedieneinrichtung berührungsempfindlich sein. In diesem Fall wird beim Bedienvorgang die berührungsempfindliche Oberfläche betätigt. Die Anzeigefläche ist somit Teil eines Touchscreens oder die Oberfläche der Bedieneinrichtung Teil eines Touchpads. Der Bedienvorgang wird dadurch ausgeführt, dass der Nutzer beispielsweise mit seiner Fingerspitze die berührungsempfindliche Oberfläche der Anzeigefläche oder der Bedieneinrichtung bei einer bestimmten Position berührt bzw. eine bestimmte Bewegung auf der berührungsempfindlichen Oberfläche ausführt.

Des Weiteren kann die berührungsempfindliche Oberfläche der Anzeigefläche oder der Bedierieinrichtung so ausgebildet sein, dass mit ihr die gleichzeitige Berührung bei verschiedenen Bereichen detektierbar ist (so genannter Multi-Touchscreen/Touchpad). In diesem Fall kann der Bedienvorgang und/oder die von dem Bedienvorgang bestimmte Bediensituation eine auf der berührungsempfindlichen Oberfläche ausgeführte Geste sein, bei der die Oberfläche der Anzeigefläche oder der Bedieneinrichtung gleichzeitig bei zumindest zwei abgrenzbaren Bereichen berührt wird. Bei der Geste kann für die beiden Bereiche auch eine Bewegung ausgeführt werden. Beispielsweise können zwei Fingerspitzen in einer bestimmten Art und Weise über die Oberfläche der Anzeigefläche oder der Bedieneinrichtung geführt werden.

Gemäß dem erfindungsgemäßen Verfahren hängt die Größe der Veränderung des Vergrößerungsfaktors von der Anzahl der abgrenzbaren Bereiche oder der Größe des Bereichs ab, bei denen bzw. bei dem die berührungsempfindliche Oberfläche der Anzeigefläche gleichzeitig bei dem Bedienvorgang und/oder der von dem Bedienvorgang bestimmten Bediensituation berührt wird. Wenn beispielweise die berührungsempfindliche Oberfläche mit zwei Fingerspitzen gleichzeitig berührt wird, kann der Vergrößerungsfaktor weiniger stark verkleinert werden, als wenn die berührungsempfindliche Oberfläche mit mehr als zwei Fingerspitzen gleichzeitig berührt wird. Ferner kann der Vergrößerungsfaktor überhaupt nicht verändert werden, wenn die berührungsempfindliche Oberfläche nur mit einer Fingerspitze berührt wird.

Bei einer Ausgestaltung des erfindungsgemäßen Verfahrens wird bei dem Bedienvorgang die berührungsempfindilche Oberfläche der Anzeigefläche oder der Bedieneinrichtung gleichzeitig bei zwei Bereichen berührt, wobei die Bereiche zum Vergrößern des Vergrößerungsfaktors voneinander weg bewegt werden und die Bereiche zum Verkleinern des Vergrößerungsfaktors aufeinander zu bewegt werden. Bei der Geste handelt es sich In diesem Fall um einen so genannten Multi-Touch-Zoom. Um in diesem Fall die Teilmenge einer Gesamtinformation möglichst schnell zu verändern, werden die beiden Bereiche, die auf der berührungsempfindlichen Oberfläche berührt werden, aufeinander zu bewegt, wodurch der Vergrößerungsfaktor verkleinert wird. Gleichzeitig bewirkt dieser Bedienvorgang, dass die angezeigte Teilmenge der Gesamtinformation entsprechend dem neuen Vergrößerungsfaktor für den Bedienvorgang verändert wird.

Gemäß einer anderen Ausgestaltung des erfindungsgemäßen Verfahrens wird die Bediensituation von einem Bedienvorgang bestimmt, bei dem die berührungsempfindliche Oberfläche der Anzeigefläche oder der Bedieneinrichtung zum Verkleinern des Vergrößerungsfaktors gleichzeitig bei zwei Bereichen berührt. Zum Verändern der angezeigten Teilmenge der Gesamtinformation werden beim Bedienvorgang die Bereiche auf der Oberfläche verschoben. Die in diesem Fall ausgeführte Geste des Bedienvorgangs entspricht einem so genannten Multi-Touch-Drag. Die gleichzeitige Berührung der Oberfläche der Anzeigefläche oder der Bedieneinrichtung wird als Bediensituation interpretiert, die zu einer Verkleinerung des Vergrößerungsfaktors führt. Die Länge des Verschiebens der Bereiche bewirkt eine Veränderung der angezeigten Teilmenge der Gesamtinformatlon, deren Größe von dem für den Bedienvorgang bestimmten verkleinerten Vergrößerungsfaktor sowie der Länge des Verschiebens der Bereiche abhängt. Wird wie vorstehend beschrieben beispielsweise eine Teilmenge einer Liste angezeigt, kann die Liste mit zwei Fingern berührt und in Richtung der Listeneinträge verschoben werden, die angezeigt werden sollen.

Gemäß einer anderen Ausgestaltung kann die Bediensituation von einem Bedienvorgang bestimmt werden, bei dem die berührungsempfindliche Oberfläche der Anzeigefläche oder der Bedieneinrichtung bei einem Bereich für eine lange Zeitdauer betätigt werden. Unter einer langen Zeitdauer" wird in diesem Fall verstanden, dass die berührungsempfindliche Oberfläche länger als ein vorgegebenes Zeitintervall von z. B. 100 ms betätigt wird. Eine solche Betätigung wird dann als Bediensituation interpretiert, die zu einer Veränderung des Vergrößerungsfaktors für den Bedienvorgang führt. Das Maß der Veränderung des Vergrößerungsfaktors kann dabei von der Dauer der Betätigung abhängen

Gemäß einer weiteren Ausgestaltung des erfindungsgemäßen Verfahrens wird die bei dem Bedienvorgang vom Nutzer ausgeübte Kraft detektiert und die Bediensituation, die zu der Veränderung des Vergrößerungsfaktors führt, hängt von der beim Bedienvorgang vom Nutzer ausgeübten Kraft ab. Es kann beispielsweise die Kraft detektiert werden, die bei der Berührung des Touchscreens oder des Touchpads ausgeübt wird. Überschreitet diese Kraft einen bestimmten Schwellwert, wird dies als eine Bediensituation interpretiert, bei welcher der Vergrößerungsfaktor verändert, insbesondere verkleinert, wird. Des Weiteren kann die Kraft den Bedienvorgang selbst bestimmen. In Abhängigkeit von der Größe der Kraft wird bestimmt, um welche Größe sich die angezeigte Teilmenge der Gesamtinformation verändert.

Bei dieser Ausgestaltung des erfindungsgemäßen Verfahren kann der Nutzer ferner die Geschwindigkeit, mit der sich die angezeigte Teilmenge der Gesamtinformation ändert, über die Kraft steuern, mit welcher er die Bedieneinrichtung betätigt. Hierdurch kann somit die Bediendauer weiter verkürzt werden. Außerdem ist die Steuerung der Geschwindigkeit, mit der sich die angezeigte Teilmenge ändert, über die auf die Eingabevorrichtung ausgeübte Kraft für den Nutzer intuitiv verständlich, so dass der Bedienvorgang für den Nutzer sehr einfach durchgeführt werden kann.

Falls man des Weiteren die Fläche berücksichtigt, auf welche die Kraft vom Nutzer ausgeübt wird, kann auch der beim Bedienvorgang ausgeübte Druck detektiert werden und die Geschwindigkeit, mit der sich die angezeigte Teilmenge der Gesamtinformation verändert, hängt in diesem Fall von dem ausgeübten Druck ab. Im Folgenden wird daher nicht zwischen den Größen *Druck* und *Kraft* im Einzelnen unterschieden.

Die Geschwindigkeit, mit der die angezeigte Teilmenge der Gesamtinformation verändert wird, ist insbesondere um so höher, desto größer die vom Nutzer bei der Bedienung ausgeübte Kraft ist. Der Nutzer kann somit die Geschwindigkeit erhöhen, indem er stärker auf die Bedieneinrichtung drückt.

Gemäß einer Ausgestaltung des erfindungsgemäßen Verfahrens wird die bei dem Bedienvorgang ausübbare Kraft in Bereiche unterteilt. Die Geschwindigkeit, mit der die angezeigte Teilmenge der Gesamtinformation verändert wird, hängt in diesem Fall vom Bereich ab, in welchen die ausgeübte Kraft fällt. Die Geschwindigkeit wird in diesem Fall somit schrittweise bei Überschreiten bestimmter Schwellenwerte verändert.

Gemäß einer anderen Ausgestaltung hängt die Geschwindigkeit, mit der die angezeigte Teilmenge der Gesamtinformation verändert wird, von der ausgeübten Kraft in folgender Weise ab:

$$v = F \cdot D \quad,$$

wobei *v* die Geschwindigkeit, F die ausgeübte Kraft und D ein Dämpfungsfaktor ist. Zwischen der ausgeübten Kraft und der Geschwindigkeit, mit der die angezeigte Teilmenge der Gesamtinformation verändert wird, besteht somit ein linearer Zusammenhang.

Gemäß einer anderen Ausgestaltung des erfindungsgemäßen Verfahrens wird die Information in einem Fahrzeug angezeigt wird und die Bediensituation durch einen fahrspezifischen Parameter bestimmt. Beispielsweise kann die Geschwindigkeit des Fahrzeugs gemessen werden. Die Bediensituation hängt in diesem Fall von der Geschwindigkeit des Fahrzeugs ab. Beispielsweise kann der Vergrößerungsfaktor bei höheren Geschwindigkeiten um ein größeres Maß reduziert werden, so dass das Maß der Veränderung der angezeigten Information bei einem bestimmten Bedienvorgang größer ist als bei niedrigeren Geschwindigkeiten.

Gemäß einer weiteren Ausgestaltung des erfindungsgemäßen Verfahrens hängt der Detailreichtum von Elementen der angezeigten Informationen von dem Vergrößerungsfaktor der angezeigten Information abhängt. Wird die angezeigte Information beispielsweise für den Bedienvorgang stark verkleinert dargestellt, indem z. B. die berührungsempfindliche Oberfläche der Anzeigefläche mit mehreren Fingerspitzen berührt wird, können Elemente der angezeigten Information, die ursprünglich mit einem großen Detailreichtum dargestellt worden sind, so transformiert werden, dass nur noch die relevanten Strukturelemente der Elemente angezeigt werden. Handelt es sich bei der angezeigten Teilmenge beispielsweise um eine Liste, kann bei den Listeneinträgen bei einer starken Verkleinerung nur noch der Anfangsbuchstabe der Listeneinträge angezeigt werden. Handelt es sich bei der angezeigten Teilmenge um eine geographische Karte, können bei einer starken Verkleinerung der Karte nur noch Hauptverkehrswege und Städte, die eine bestimmte Größenordnung übersteigen, angezeigt werden. Nach Beendigung des Bedienvorgangs, wenn der Vergrößerungsfaktor wieder auf seine ursprüngliche Größe zurückgesetzt wird, werden die Elemente auch wieder in ihrem ursprünglichen Detailreichtum dargestellt.

Die erfindungsgemäße Vorrichtung ist dadurch gekennzeichnet, dass die Anzeige auf der Anzeigefläche so steuerbar ist, dass sich der Vergrößerungsfaktor für den Bedienvorgang in Abhängigkeit von einer Bediensituation verändert.

Die erfindungsgemäße Vorrichtung ist insbesondere so ausgestaltet, dass sie die vorstehend beschriebenen Verfahrensschritte teilweise oder vollständig ausführen kann.

Von der erfindungsgemäßen Vorrichtung ist insbesondere während des Ausführens des Bedienvorgangs der Vergrößerungsfaktor der angezeigten Teilmenge veränderbar, so dass sich die Größe der von dem Bedienvorgang induzierten Veränderung der angezeigten Information verkleinert oder vergrößert.

Gemäß einer Ausgestaltung der erfindungsgemäßen Vorrichtung ist die Gesamtinformation eine Liste mit einer Vielzahl von Listeneinträgen, von denen nur eine Teilmenge anzeigbar ist. In diesem Fall ist die Anzahl der Listeneinträge der Teilmenge von dem Vergrößerungsfaktor abhängig. Ferner kann die Gesamtinformation eine geographische Karte darstellen, von der nur ein Teilbereich anzeigbar ist. In diesem Fall hängt der Kartenmaßstab vom Vergrößerungsfaktor ab.

Gemäß einer Ausgestaltung der erfindungsgemäßen Vorrichtung ist die Bediensituation durch den Bedienvorgangs selbst bestimmt. Der Bedienvorgang umfasst insbesondere die vorstehend mit Bezug zu dem erfindungsgemäßen Verfahren beschriebenen Bedienvorgänge. Hierfür umfasst die Bedieneinrichtung beispielsweise eine berührungsempfindliche Oberfläche. Diese Oberfläche kann Teil eines sogenannten Touchpads sein. Ferner kann die Oberfläche auf der Anzeigefläche ausgebildet sein, d. h. die Anzeigevorrichtung ist mit einem Touchscreen ausgestattet. Der Touchpad oder der Touchscreen kann insbesondere als Multi-Touchpad/Touchscreen ausgebildet sein, d. h. mit der berührungsempfindlichen Oberfläche ist die gleichzeitige Berührung bei verschiedenen Bereichen detektierbar. Die Größe des Bereichs kann sich dabei beispielsweise nach der Größe des Bereichs richten, welcher von der Berührung der Fingerspitze eines Nutzers eingenommen wird.

Ferner kann die Bedieneinrichtung ein mechanisches Bedienelement umfassen. Dieses Bedienelement ist z. B. ein mechanischer Drehsteller, ein Bedienelement, welches in zwei Dimensionen betätigbar ist, oder ein Joystick, um die angezeigte Teilmenge in verschiedenen Richtungen auf der Anzeigefläche zu verschieben.

Die Bedieneinrichtung kann ferner einen Sensor zum Erfassen der Betätigungsgeschwindigkeit des mechanischen Bedienelements, zum Erfassen der Dauer der Berührung des mechanischen Bedienelements und/oder zum Erfassen des Loslassens des mechanischen Bedienelements umfassen. Beispielsweise kann die Bedieneinrichtung eine infrarotbasierte oder kapazitive Berührungssensorik umfassen.

Die Bedieneinrichtung kann ferner eine drucksensitive Oberfläche umfassen, mit welcher die bei der Betätigung der Bedieneinrichtung ausgeübte Kraft detektierbar ist. Die Kraft kann beispielsweise resistiv oder kapazitiv detektiert werden. Gemäß einer Ausgestaltung der erfindungsgemäßen Bedieneinrichtung ist die drucksensitive Oberfläche auf einem Touchscreen oder einem Touchpad ausgebildet, so dass die Kraft ortsaufgelöst detektiert werden kann, d.h. es kann detektiert werden, an welcher Stelle und gegebenenfalls auf welcher Fläche die Kraft auf die berührungsempfindliche Oberfläche ausgeübt wird.

Gemäß einer weiteren Ausgestaltung der erfindungsgemäßen Vorrichtung ist die Anzeigefläche in einem Fahrzeug angeordnet und die Bediensituation durch einen fahrspezifischen Parameter bestimmt. Die Vorrichtung umfasst insbesondere einen Sensor zum Messen der Geschwindigkeit des Fahrzeugs, wobei in diesem Fall die Bediensituation von der Geschwindigkeit des Fahrzeugs abhängt.

Es wird darauf hingewiesen, dass die Bediensituation zwar von dem Bedienvorgang bestimmt sein kann. Die Bediensituation stellt jedoch ein von dem Bedienvorgang ansonsten unabhängiges Ereignis dar. Der Bedienvorgang betrifft insbesondere nicht die Veränderung des Vergrößerungsfaktors für die Darstellung der Information auf der Anzeigefläche. Mit dem Bedienvorgang wird die angezeigte Teilmenge der Gesamtinformation auf andere Weise, wie z. B. durch ein Verschieben der Teilmenge innerhalb der Gesamtinformation, verändert. Das Auftreten einer bestimmten Bediensituation, wie es vorstehend erläutert wurde, führt dazu, dass für den Bedienvorgang, der an sich nicht zu einer Veränderung des Vergrößerungsfaktors führt, der Vergrößerungsfaktor der Informationsanzeige auf der Anzeigefläche kurzzeitig, d. h. für den Bedienvorgang, verändert wird, um einen Einfluss darauf auszuüben, wie sich die angezeigte Information für einen vorgegebenen Bedienvorgang verändert.

Die Erfindung wird nun an Hand von Ausführungsbeispielen mit Bezug zu den Zeichnungen erläutert.

Figur 1          zeigt schematisch den Aufbau eines ersten Ausführungsbeispiels der erfindungsgemäßen Vorrichtung und die Koppelung dieser Vorrichtung mit anderen Einrichtungen des Fahrzeugs,

Figur 2          zeigt schematisch den Aufbau eines Ausführungsbeispiels einer Vorrichtung und die Koppelung dieser Vorrichtung mit anderen Einrichtungen des Fahrzeugs,

Figur 3          zeigt ein Beispiel für die Aufsicht auf die berührungsempfindliche Oberfläche einer Bedieneinrichtung,

die Figuren 4A und 4B     zeigen Anzeigen der Anzeigevorrichtung gemäß einem Ausführungsbeispiel des erfindungsgemäßen Verfahrens,

die Figuren 5A und 5B     zeigen Anzeigen der Anzeigevorrichtung gemäß einem weiteren Ausführungsbeispiel des erfindungsgemäßen Verfahrens und

die Figuren 6A bis 6C      zeigen Anzeigen der Anzeigevorrichtung gemäß noch einem weiteren Ausführungsbeispiel des erfindungsgemäßen Verfahrens.

Die im folgenden beschriebenen Ausführungsbeispiele beziehen sich auf Informationsanzeigen in einem Fahrzeug, insbesondere einem Kraftfahrzeug. Die Erfindung kann auf gleiche Weise jedoch auch bei Informationsanzeigen außerhalb eines Fahrzeugs eingesetzt werden, z. B. bei der Informationsanzeige auf einem mobilen Gerät.

Die Vorrichtung zum Anzeigen von Information umfasst eine Anzeigevorrichtung 1 mit einer Anzeigefläche 2, die so im Innenraum des Fahrzeugs angeordnet ist, dass sie von zumindest einem Fahrzeuginsassen, insbesondere dem Fahrer, gut sichtbar ist. Die Anzeigefläche 2 kann von einem Display, insbesondere einem Flüssigkristalldisplay, beliebiger Bauart bereitgestellt werden. Die Anzeigevorrichtung ist mit einer Steuervorrichtung 3 gekoppelt.

Die Steuervorrichtung 3 erzeugt Grafikdaten, die mittels der Anzeigevorrichtung 1 angezeigt werden können. Die Steuervorrichtung 3 ist hierfür mit einem Speicher 4 zum Speichern von Daten verbunden. Die Daten können eine so genannte Gesamtinformation umfassen, die einem bestimmten Informationsbereich zugeordnet sind. Von dieser Gesamtinformation ist auf der Anzeigefläche 2 der Anzeigevorrichtung 1 nur eine Teilmenge anzeigbar, wie es später erläutert wird.

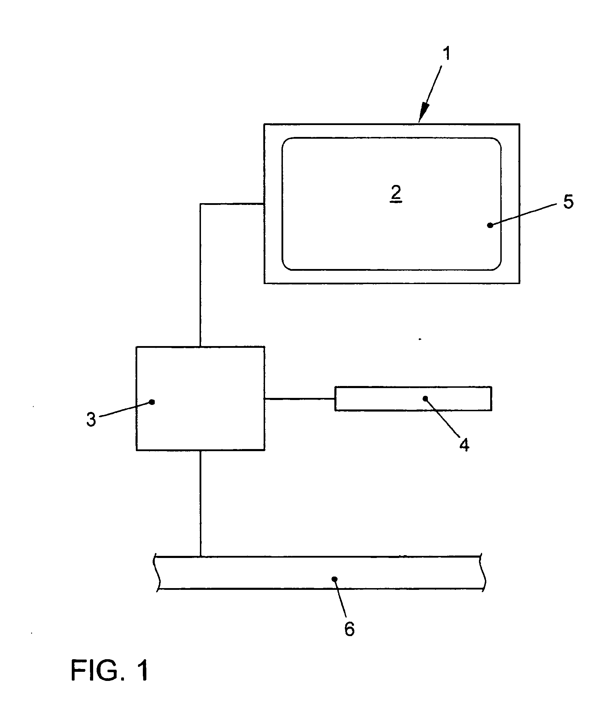

Die Steuervorrichtung 3 ist ferner Teil einer Bedieneinrichtung, die von einem Nutzer betätigbar ist, um die angezeigte Teilmenge der Gesamtinformation durch einen Bedienvorgang zu verändern. Bei dem in Figur 1 gezeigten Ausführungsbeispiel umfasst die Bedieneinrichtung eine berührungsempfindliche Oberfläche 5 der Anzeigefläche 2. Die Anzeigevorrichtung 1 umfasst somit einen Touchscreen. Auf der berührungsempfindlichen Oberfläche 5 der Anzeigefläche 2 ist ferner insbesondere die gleichzeitige Berührung bei verschiedenen Bereichen detektierbar. Es handelt sich somit um einen so genannten Multi-Touchscreen.

Alternativ kann die berührungsempfindliche Oberfläche auch separat von der Anzeigefläche 2 vorgesehen sein. In diesem Fall umfasst die Bedieneinrichtung somit ein Touchpad.

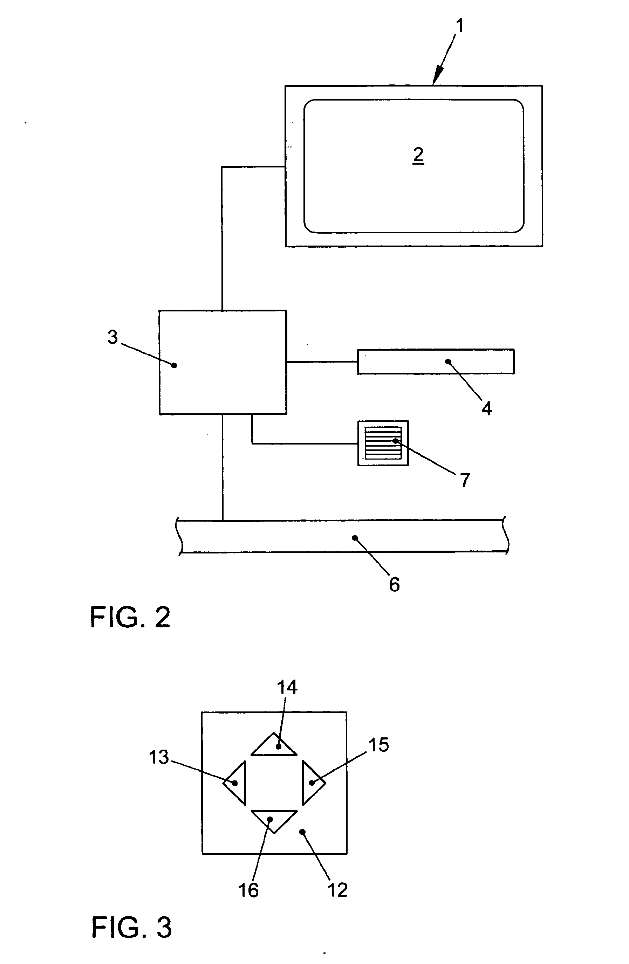

Bei dem in Figur 2 gezeigten Biespiel, welches nicht unter den beanspruchten Gegenstand fällt, umfasst die Bedieneinrichtung ein mechanisches Bedienelement 7, das z. B. als Drehsteller ausgebildet sein kann. Das mechanische Bedienelement 7 ist mit der Steuervorrichtung 3 gekoppelt. Die Steuervorrichtung 3 ist so ausgebildet, dass durch eine Betätigung der Oberfläche 5 der Anzeigefläche 2 bzw. des mechanischen Bedienelements 7 die auf der Anzeigefläche 2 angezeigte Information vom Nutzer verändert werden kann. Durch eine Betätigung der berührungsempfindlichen Oberfläche 5 bzw. durch das mechanische Bedienelement 7 kann der Nutzer insbesondere die angezeigte Teilmenge der Gesamtinformation verändern.

Bei dem mechanischen Bedienelement 7 kann es sich ferner um Tastschalter handeln, mit welchen Bewegungsrichtungen für die Veränderung der angezeigten Information gesteuert werden kann. Schließlich kann es sich bei dem mechanischen Bedlenelement 7 auch um einen digitalen oder analogen Joystick handeln.

Bei der Betätigung der berührungsempfindlichen Oberfläche 5 oder bei der Betätigung des mechanischen Bedienelements 7 kann von der Steuervorrichtung 3 Insbesondere die Betätigungsgeschwindigkeit, die Betätigungs- bzw. die Berührdauer sowie das Loslassen der Oberfläche 5 bzw. des Bedienelements 7 detektiert werden. Die Steuervorrichtung 3 bzw. das mechanische Bedienelement 7 umfassen hierfür entsprechende Sensoren. Es kann sich hierbei beispielsweise um eine infrarotbasierte oder kapazitive Berührungssensorik handeln. Des Weiteren kann bei einem mechanischen Bedienelement 7 eine Translations- oder Winkelaustenkung detektiert werden.

Gemäß einem weiteren Ausführungsbeispiel umfasst die Bedieneinrichtung eine druck-sensitive Oberfläche, mit welcher die bei der Betätigung der Bedieneinrichtung ausgeübte Kraft detektiert werden kann. Bei der drucksensitiven Oberfläche kann es sich um ein so genanntes Touchpad handeln. Ferner kann eine Oberfläche eines Bedienelements 7 eine drucksensitive Oberfläche umfassen. Schließlich kann die Anzeigefläche 2 der Anzeigevorrichtung 1 die drucksensitive Oberfläche aufweisen, so dass die Bedieneinrichtung in diesem Fall ein drucksensitiver Touchscreen ist.

Gemäß einer speziellen Ausgestaltung der drucksensitiven Bedieneinrichtung ist die Oberfläche 12 in Wirkverbindung mit einer ersten Schicht, die eine Vielzahl leitender Spuren aufweist, die auf der Oberfläche der Schicht in einer ersten Richtung ausgerichtet sind. Ferner ist eine zweite Schicht vorgesehen, welche auch eine Vielzahl leitender Spuren aufweist, die in einer zweiten Richtung auf der Oberfläche der zweiten Schicht ausgerichtet sind. Zwischen den beiden Schichten ist eine deformierbare dielektrische Membran angeordnet. Durch die Anordnung der beiden Schichten und der Membran ist es möglich, dass mittels der leitenden Spuren der beiden Schichten ein Kapazitätsabbild gewonnen wird, wenn eine Kraft auf die erste Schicht ausgeübt wird. Dieses Kapazitätsabbild zeigt die Größe der Kraft an, die bei den jeweiligen Positionen auf die Oberfläche 5 ausgeübt wird. Weitere Details und Ausgestaltungen können der EP 1 840 715 A2 entnommen werden, die durch Bezugnahme in die vorliegende Anmeldung aufgenommen wird.

Fig. 3 zeigt ein Beispiel einer Aufsicht auf die drucksensitive Oberfläche 12 einer Bedieneinrichtung 13. Die Oberfläche 12 umfasst vier Bedienelemente 13 bis 16, welche Pfeile andeuten, die angeben, in welche Richtung ein auf der Anzeigefläche 2 dargestelltes Objekt verschoben werden soll oder in welche Richtung die von der Anzeigefläche 2 angezeigte Teilmenge, wie z. B. ein Ausschnitt in einer virtuellen Ebene, verschoben werden soll.

Des Weiteren ist die Steuervorrichtung 3 mit einem Fahrzeugbus 6 gekoppelt, über welchen Daten mit vielfältigen Einrichtungen des Fahrzeugs ausgetauscht werden können. Insbesondere kann die aktuelle Fahrzeuggeschwindigkeit über den Fahrzeugbus 6 an die Steuervorrichtung 3 übertragen werden.

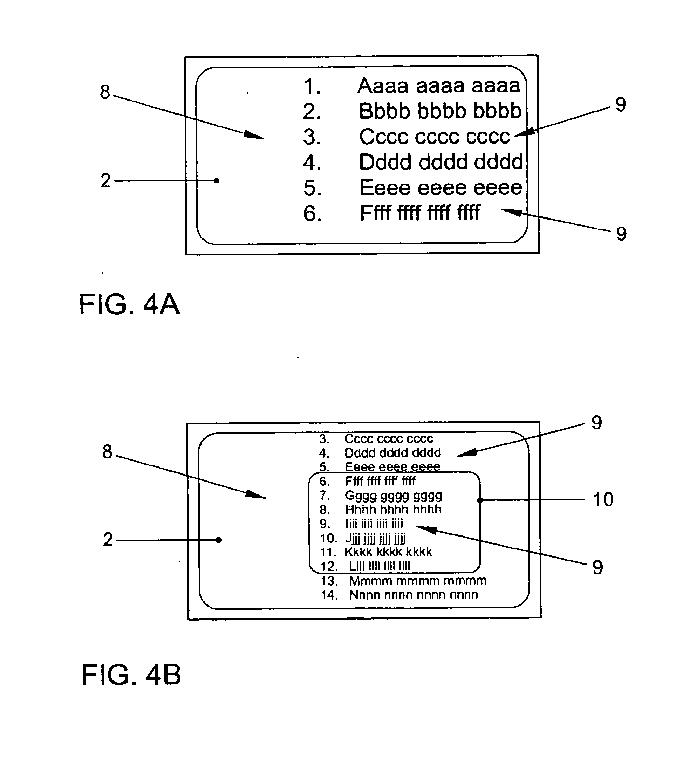

Im Folgenden wird mit Bezug zu den Figuren 4A und 4B ein erstes Ausführungsbeispiel des erfindungsgemäßen Verfahrens erläutert, welches von den vorstehend beschriebenen Vorrichtungen durchgeführt werden kann:

Bei diesem Ausführungsbeispiel ist die Gesamtinformation eine Liste 8 mit einer Vielzahl von Listeneinträgen 9, von denen nur eine Teilmenge angezeigt wird. Die Anzahl der Listeneinträge 9 der angezeigten Teilmenge hängt von dem Vergrößerungsfaktor für die Anzeige der Liste 8 ab. Die Figur 4A zeigt den Fall, bei dem der Vergrößerungsfaktor so gewählt ist, dass auf der Anzeigefläche 2 insgesamt sechs Listeneinträge 9 der Liste 8 angezeigt werden. Die angezeigte Teilmenge kann nun durch einen Bedienvorgang eines Nutzers verändert werden. Der Nutzer kann insbesondere einen Bildlauf bzw. ein Scrollen hervorrufen. Dabei werden aufeinander folgend Anzeigebilder auf der Anzeigefläche 2 wiedergegeben, bei denen nacheinander Listeneinträge 9 verschwinden und andere Listeneinträge angezeigt werden. Erzeugt der Nutzer ausgehend von der Anzeige der Figur 4A beispielsweise einen Bildlauf nach unten, verschwindet zunächst der erste Listeneintrag 9 und nach dem sechsten Listeneintrag 9 erscheint der siebte Listeneintrag. Danach verschwindet der zweite Listeneintrag 9 und nach dem siebten Listeneintrag erscheint der achte Listeneintrag usw.

Die Größe bzw. die Geschwindigkeit des Bildlaufs hängt dabei zum einen von dem später beschriebenen Bedienvorgang ab und zum anderen von dem Vergrößerungsfaktor der angezeigten Information. Unter der Geschwindigkeit des Bildlaufs, d. h. der Veränderung der angezeigten Teilmenge, wird in diesem Fall verstanden, in welcher Zeiteinheit ein Listeneintrag verschwindet und dafür ein anderer Listeneintrag angezeigt wird. Dabei ist die Geschwindigkeit der Veränderung umso höher, je kleiner der Vergrößerungsfaktor ist, d. h. je kleiner die angezeigte Teilmenge der Gesamtinformation dargestellt wird, d. h. je mehr Listeneinträge 9 auf der Anzeigefläche 2 angezeigt werden.

Das erfindungsgemäße Verfahren zeichnet sich insbesondere dadurch aus, dass sich der Vergrößerungsfaktor für den Bedienvorgang, d. h. im vorliegenden Fall für den Bildlauf, in Abhängigkeit von einer später beschriebenen Bediensituation verändert. Wird aus der Bediensituation von der Steuervorrichtung 3 ermittelt, dass beispielsweise der Vergrößerungsfaktor für den Bildlauf verkleinert werden soll, werden von der Steuervorrichtung 3 entsprechende Grafikdaten erzeugt, die dazu führen, dass auf der Anzeigefläche 2 die angezeigte Teilmenge der Gesamtinformation mit einem kleineren Vergrößerungsfaktor angezeigt wird. Dies führt üblicherweise dazu, dass die Teilmenge mehr Information enthält. Im vorliegenden Beispiel werden bei der Verringerung des Vergrößerungsfaktors mehr Listeneinträge angezeigt. In Figur 4B ist der Fall angezeigt, bei dem der Vergrößerungsfaktor für den Bildlauf so verkleinert wurde, dass zwölf Listeneinträge 9 angezeigt werden.

Da die Geschwindigkeit des Bildlaufs von dem Vergrößerungsfaktor abhängt, wird bei einem vorgegebenen Bedienvorgang nach der Verringerung des Vergrößerungsfaktors, wie er in Figur 4B dargestellt ist, ein schnellerer Bildlauf durchgeführt, als dies bei der in Figur 4A wiedergegebenen Darstellung der Fall wäre. In Abhängigkeit von einer Bediensituation kann der Nutzer somit mit einem bestimmten Bedienvorgang einen schnelleren Bildlauf hervorrufen und somit schneller durch die Liste 8 scrollen.

Nach Beendigung des Bedienvorgangs wird der Vergrößerungsfaktor wieder auf den ursprünglichen Wert zurückgesetzt, bei dem im vorliegenden Beispiel sechs Listeneinträge 9 von der Anzeigefläche 2 wiedergegeben werden. Um in der Darstellung mit dem verkleinerten Vergrößerungsfaktor, die in Figur 4B wiedergegeben ist, deutlich zu machen, welche Listeneinträge nach dem Zurücksetzen des Vergrößerungsfaktors angezeigt werden, wird bei der Darstellung mit dem verkleinerten Vergrößerungsfaktor ein Rahmen 10 angezeigt, welcher die nach dem Zurücksetzen des Vergrößerungsfaktors angezeigten Listeneinträge 9 enthält.

Im Folgenden werden verschiedene Bedienvorgänge beschrieben, welche zu einem Bildlauf der Liste 8 führen. Des Weiteren zeichnen sich diese Bedienvorgänge dadurch aus, dass sie auch die Bediensituation bestimmen, die dazu führt, dass sich der Vergrößerungsfaktor, nach welchem sich die Geschwindigkeit des Bildlaufs richtet, verändert, insbesondere verringert.

Ist die Anzeigevorrichtung 1 wie mit Bezug zu Figur 1 erläutert als Multi-Touchscreen ausgestaltet, kann es sich bei dem Bedienvorgang z. B. um einen so genannten Multi-Touch-Zoom handeln, bei dem der Nutzer die Oberfläche 5 der Anzeigefläche 2 gleichzeitig mit zwei Fingern berührt und die Bereiche, bei denen er die Oberfläche 5 berührt, voneinander entfernt (Zoom-in) oder aufeinander zu bewegt (Zoom-out). Die durch diese Multi-Touch-Geste erzeugte Eingabe kann den Vergrößerungsfaktor entweder stufenlos in Abhängigkeit von dem Maß wie weit die Bereiche aufeinander zu oder voneinander weg bewegt worden sind, verändern. Alternativ können mögliche Vergrößerungsfaktoren vorgegeben sein, welche in Abhängigkeit von dem Maß, wie weit die Bereiche voneinander weg oder aufeinander zu bewegt worden sind, ausgewählt werden.

Nach einem bestimmten Zeitintervall von z. B. drei Sekunden, innerhalb dessen keine manuelle Interaktion mit der berührungsempfindlichen Oberfläche 5 erfolgt ist, wird der Vergrößerungsfaktor wieder auf den ursprünglichen Wert zurückgesetzt. Gleichermaßen wird bei einer Auswahl eines Listeneintrags 9 die Darstellung wieder auf den ursprünglichen Vergrößerungsfaktor zurückgesetzt, wobei der ausgewählte Listeneintrag 9 zentral auf der Anzeigefläche 2 wiedergegeben wird.

Der Bildlauf innerhalb der Liste 8 kann entweder auch durch die Multi-Touch-Zoom-Geste hervorgerufen werden oder durch eine separate Betätigung der berührungsempfindlichen Oberfläche 5. Beispielsweise kann die Richtung (vertikal oder horizontal bzw. diagonal), in welcher die Bereiche, bei denen die Finger die berührungsempfindliche Oberfläche 5 berühren, aufeinander zu bewegt werden, derart von der Steuervorrichtung 3 interpretiert werden, dass ein Bildlauf nach oben oder nach unten in der Liste 8 erfolgen soll. Andererseits kann nach der Multi-Touch-Zoom-Geste eine Verschiebe-Geste auf der berührungsempfindlichen Oberfläche 5 ausgeführt werden, bei der der Nutzer die Fingerspitze nach oben oder nach unten über die berührungsempfindliche Oberfläche 5 führt, was zu einem Bildlauf nach oben oder nach unten führt. Führt der Nutzer beispielsweise seine Fingerspitze eine bestimmte Strecke auf der berührungsempfindlichen Oberfläche 5 nach unten, welche vertikal auf der Anzeigefläche 2 eine Länge hat, die z. B. drei Listeneinträgen entspricht, würde sich bei der Darstellung der Figur 4A die angezeigte Teilmenge der Liste 8 um drei Einträge verändern. Da sich bei dem erfindungsgemäßen Verfahren aber der Vergrößerungsfaktor, wie in Figur 4B gezeigt, für den Bildlauf verändert hat, führt in diesem Fall der gleiche Bedienvorgang, d. h. eine Bewegung der Fingerspitze auf der berührungsempfindlichen Oberfläche 5 um dieselbe Strecke, zu einer Veränderung der angezeigten Listeneinträge 9 um sieben Positionen, da bei dem verkleinerten Vergrößerungsfaktor, wie er in Figur 4B dargestellt ist, die entsprechende Strecke sieben Listeneinträgen 9 entspricht. Mit einer vorgegebenen Bedienbewegung des Bedienvorgangs kann der Nutzer somit einen sehr viel schnelleren Bildlauf erzeugen, da der Vergrößerungsfaktor für den Bedienvorgang verringert wurde. Gleichermaßen kann eine entsprechende Bedienbewegung beim Ausführen der Multi-Touch-Zoom-Geste zu einem entsprechend schnelleren Bildlauf führen.

Ferner ist es möglich, dass der Nutzer zum Erzeugen des Bildlaufs Schaltflächen auf der berührungsempfindlichen Oberfläche 5 berührt, bei der auf der Anzeigefläche 2 entsprechende Symbole für die Schaltflächen angezeigt werden. In diesem Fall kann sich die Größe bzw. die Geschwindigkeit der Veränderung der Teilmenge, d. h. die angezeigten Listeneinträge 9, in Abhängigkeit von der Dauer der Berührung dieser Schaltflächen verändern. Auch in diesem Fall führt eine bestimmte Betätigungsdauer der Schaltflächen bei dem erfindungsgemäßen Verfahren zu einem schnelleren Bildlauf, da für den Bildlauf der Vergrößerungsfaktor, wie in Figur 4B gezeigt, verkleinert wird.

Gemäß einem weiteren Beispiel wird als Bedienvorgang vom Nutzer auf der berührungsempfindlichen Oberfläche 5 der Anzeigefläche 2 eine so genannte Multitouch-Drag-Geste ausgeführt, bei der der Nutzer die berührungsempfindliche Oberfläche 5 gleichzeitig mit zwei Fingerspitzen berührt und die berührten Bereiche gleichzeitig in eine Richtung bewegt. Bei dem in den Figuren 4A und 4B gezeigten Beispiel.kann der Nutzer beispielsweise einen Listeneintrag gleichzeitig mit zwei Fingern berühren und die beiden Fingerspitzen dann nach oben führen. In diesem Fall wird zum einen die gleichzeitige Berührung zweier Bereiche des Listeneintrags 9 als eine Bediensituation interpretiert, die zu einer Verkleinerung des Vergrößerungsfaktors führt. Hätte der Nutzer den Listeneintrag nur mit einem Finger berührt, würde sich der Vergrößerungsfaktor nicht verändern. Die Länge der Bewegung der beiden Fingerspitzen, welche die berührungsempfindliche Oberfläche 5 berühren, bestimmt zusätzlich zu dem Vergrößerungsfaktor die Größe bzw. das Maß der Veränderung der angezeigten Information, d. h. um wie viele Listeneinträge 9 sich die angezeigte Teilmenge der Liste 8 verändert. Lässt der Nutzer die berührungsempfindliche Oberfläche 5 der Anzeigefläche 2 wieder los, wird die Darstellung automatisch wieder auf den ursprünglichen Vergrößerungsfaktor zurückgesetzt.

Bei einem Biespiel, das nicht unter den beanspruchten Gegenstand fällt, wird von der Bedieneinrichtung nicht eine berührungsempfindliche Oberfläche 5 der Anzeigefläche 2 verwendet, sondern ein mechanisches Bedienelement 7, wie es mit Bezug zu Figur 2 erläutert wurde. Beispielsweise kann zum Erzeugen eines Bildlaufs durch die Liste 8 der Drehsteller 7 verwendet werden. In diesem Fall kann als Bediensituation eine schnelle Drehung bzw. eine wiederholte schnelle Drehung des Drehstellers 7 so von der Steuervorrichtung 3 interpretiert werden, dass sich der Vergrößerungsfaktor für die Darstellung der Liste 8 wie in Figur 4B gezeigt verkleinert. Unter einer schnellen Drehung wird in diesem Fall beispielsweise verstanden, dass innerhalb eines vorgegebenen Zeitintervalls von z. B. 100 ms zumindest eine definierte Anzahl an Inkrementen des Drehstellers 7 durchlaufen wird. Aus dem Drehwinkel, mit welchem der Drehsteller 7 gedreht wurde, kann die Anzahl der Listeneinträge, um welche sich die angezeigte Teilmenge der Liste 8 verändert, bestimmt werden. Dabei ist die Veränderung bei einem bestimmten Drehwinkel umso größer, je kleiner der Vergrößerungsfaktor für den Bildlauf ist. Beim Loslassen des Drehstellers 7, welches über eine infrarotbasierte oder kapazitive Berührungssensorik detektiert werden kann, oder beim Ausbleiben einer weiteren Interaktion über den Drehsteller 7 innerhalb eines bestimmten Zeitintervalls von z. B. drei Sekunden, wird der Vergrößerungsfaktor automatisch auf den ursprünglichen Wert zurückgesetzt und die veränderte Teilmenge der Liste 8 wird auf der Anzelgefläche 2 angezeigt. Gleichermaßen wird bei der Auswahl eines Listeneintrags 9 der Vergrößerungsfaktor zurückgesetzt und der ausgewählte Listeneintrag wird zentral auf der Anzeigefläche 2 angeordnet.

Des Weiteren kann als Bediensituation ein sehr langes oder häufiges Drücken einer virtuellen Schaltfläche, die auf der Anzeigefläche 2 mit einer berührungsempfindlichen Oberfläche 5 angezeigt wird, interpretiert werden. Wird beispielsweise eine Schaldläche während eines Zeitintervalls von z. B. 100 ms permanent betätigt oder Innerhalb eines Zeitintervalls von z. B. einer Sekunde mehrmals betätigt, wird der Vergrößerungsfaktor für die Darstellung der Liste 8 entweder in diskreten Stufen.oder analog zur Dauer der Interaktion verkleinert. Bei einem Ausbleiben einer weiteren Interaktion über das Element 7 für z. B. drei Sekunden, wird der Vergrößerungsfaktor automatisch wieder auf den Ausgangswert zurückgesetzt. Auch bei einer Auswahl eines Listeneintrags 9 wird der Vergrößerungsfaktor zurückgesetzte und der ausgewählte Listeneintrag 9 wird zentral auf der Anzeigefläche 2 angeordnet.

Bei einem weiteren Biespiel, welches nicht unter den beanspruchten Gegenstand fällt, wird wie vorstehend erläutert die Bedieneinrichtung mit einer drucksensitiven Oberfläche 12 verwendet, wie sie beispielsweise in Fig. 3 gezeigt ist. In diesem Fall kann als Bedisituation ein besonders kräftiges Drücken eines der Bedienelemente 13 bis 16 interpretiert werden. Der Vergrößerungsfaktor für die Darstellung der Liste 8 wie in Fig. 4B gezeigt, verkleinert sich somit dann, wenn die auf die Bedienelemente 13 bis 16 ausgeübte Kraft einen bestimmten Schwellwert, der in dem Speicher 4 gespeichert sein kann, überschreitet. Nachdem der Vergrößerungsfaktor verändert wurde, wird die Liste beispielsweise bei der Betätigung des Bedienelements 15 nach oben gescrollt oder bei der Betätigung des Bedienelements 16 nach unten gescrollt. Nach dem Loslassen der Bedienelemente 13 bis 16 wird der Vergrößerungsfaktor für die Darstellung der Liste 8 wieder auf den ursprünglichen Wert zurückgesetzt.

Bei diesem Beispiel kann das Maß, um welches der Vergrößerungsfaktor beim Überschreiten des Schwellwerts für die ausgeübte Kraft verändert wird, von der ausgeübten Kraft abhängen. Beispielsweise kann der Vergrößerungsfaktor umso mehr verkleinert werden, je größer die ausgeübte Kraft ist. Schließlich kann sich auch die Scrollgeschwindigkeit unabhängig von dem Überschreiten eines Schwellwerts nach der ausgeübten Kraft auf die Bedienelemente 13 bis 16 richten. Beispielsweise kann die Geschwindigkeit; mit der sich die angezeigte Teilmenge der Gesamtinformation verändert, wie folgt bestimmt werden:

In der Steuervorrichtung 3 wird die Kraft, die unter normalen Umständen auf die Bedieneinrichtung ausgeübt wird, in Bereiche unterteilt. Die Bereichsgrenzen stellen somit Schwellenwerte dar. Jedem Bereich wird ein Geschwindigkeitswert zugeordnet, so dass mit steigender Kraft die Geschwindigkeit in diskreten Schritten beim Überschreiten der Bereichsgrenzen erhöht wird. Beispielsweise kann die ausübbare Kraft in vier Bereiche unterteilt werden.

Alternativ kann sich die Geschwindigkeit auch linear mit der ausgeübten Kraft ändern, so dass folgender Zusammenhang gilt:

$$v = F \cdot D \quad,$$

wobei $v$ die Geschwindigkeit, $F$ die ausgeübte Kraft und $D$ ein Dämpfungsfaktor ist, der in der Steuervorrichtung 3 bzw. dem Speicher 4 gespeichert ist.

Gemäß einer anderen Ausgestaltung dieses Ausführungsbeispiels ist die Bedisituation von dem Bedienvorgang unabhängig. Beispielsweise kann sich die Verringerung des Vergrößerungsfaktors nach der Fahrzeuggeschwindigkeit richten. Bei höheren Fahrzeuggeschwindigkeiten kann die Darstellung der Liste 8 stärker verkleinert werden, so dass eine bestimmte Bedienbewegung oder Bediendauer zu einer stärkeren Veränderung der angezeigten Teilmenge der Liste 8 führt. Wenn nämlich der Fahrer des Fahrzeugs den Bedienvorgang ausführt, ist es bei hohen Geschwindigkeiten besonders wichtig, dass er besonders schnell durch eine z. B. sehr lange Liste scrollen kann.

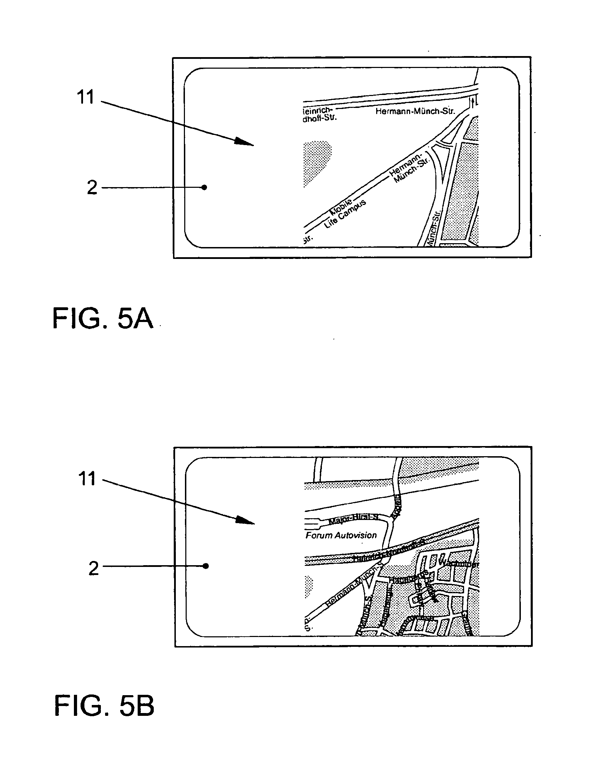

Mit Bezug zu den Figuren 5A und 5B wird ein weiteres Ausführungsbeispiel des erfindungsgemäßen Verfahrens beschrieben, welches von den vorstehend beschriebenen Vorrichtungen ausgeführt werden kann:

Bei diesem Ausführungsbeispiel wird, wie in den Figuren 5A und 5B gezeigt, von der Anzeigefläche 2 ein Ausschnitt einer geographischen Karte 11 angezeigt. Die Anzeigevorrichtung 1 gibt in diesem Fall beispielsweise die Anzeige eines Navigationssystems des Fahrzeugs wieder. Der Nutzer hat in diesem Fall die Möglichkeit, über die berührungsempfindliche Oberfläche 5 der Anzeigefläche 2 den angezeigten Ausschnitt in verschiedenen Richtungen zu verschieben.

Der angezeigte Ausschnitt der geographischen Karte 11 kann in verschiedenen Kartenmaßstäben wiedergegeben werden. Der Kartenmaßstab entspricht in diesem Fall dem vorstehend beschriebenen Vergrößerungsfaktor. In Figur 5A ist beispielsweise eine Wiedergabe des Kartenausschnitts mit einem relativ großen Vergrößerungsfaktor gezeigt. Will der Nutzer ausgehend von diesem Kartenmaßstab die Karte über einen großen Bereich verschieben, indem er beispielsweise die Fingerspitze über die berührungsempfindliche Oberfläche 5 der Anzeigefläche 2 bewegt oder einen Tastschalter für eine bestimmte Dauer betätigt, würde der Bedienvorgang relativ lange dauern, bis weit entfernte Bereiche der Karte zur Anzeige gebracht werden. Aus diesem Grund wird bei dem erfindungsgemäßen Verfahren, wie beim ersten Ausführungsbeispiel beschrieben, der Vergrößerungsfaktor, d. h. der Kartenmaßstab, in Abhängigkeit von der Bedisituation verändert, insbesondere verkleinert, wie es in Figur 5B dargestellt ist.

Die auf der geographischen Karte 11 angezeigten Elemente, wie z. B. die Straßen, Gebäude oder Sonderziele, die graphisch dargestellt werden, können sich bei einer Verkleinerung des Kartenmaßstabs verändern. Dabei kann sich insbesondere bei einer Verkleinerung des Maßstabs der Detailreichtum der graphisch dargestellten Elemente verringern. Bei einem kleineren Maßstab können z. B. nur noch relevante Strukturelemente der graphischen Darstellung der Elemente gezeigt werden.

Die Bedienvorgänge und Bediensituationen des zweiten Ausführungsbeispiels können im Wesentlichen denen des ersten Ausführungsbeispiels entsprechen, so dass sie nicht erneut erläutert werden.

Schließlich wird noch darauf hingewiesen, dass der Übergang zwischen den Darstellungen mit verschiedenen Vergrößerungsfaktoren jeweils animiert erfolgt, so dass sich fließende Übergänge zwischen den Darstellungen ergeben.

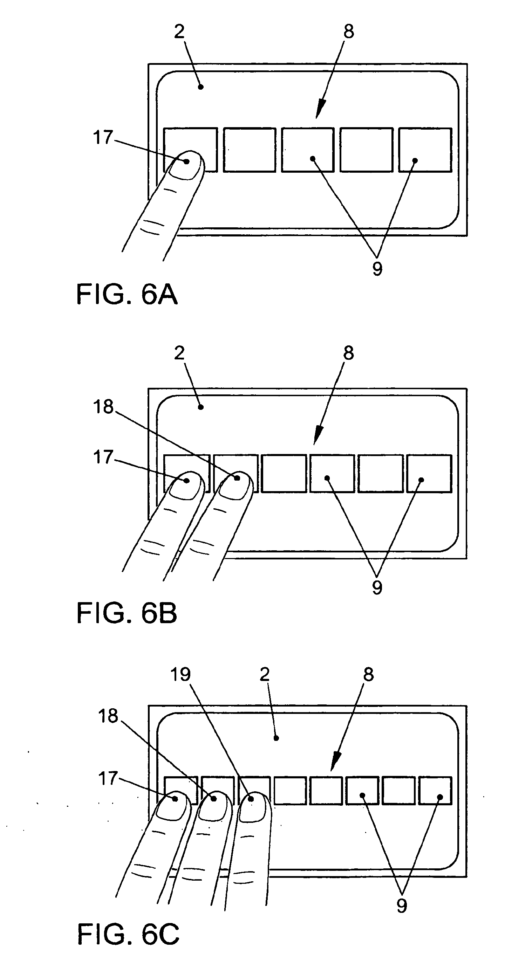

Mit Bezug zu den in Fig. 6A bis 6C wird noch ein weiteres Ausführungsbeispiel des erfindungsgemäßen Verfahrens beschrieben, welches von den vorstehend beschriebenen Vorrichtungen ausgeführt werden kann:

Bei diesem Ausführungsbeispiel umfasst die Bedieneinrichtung eine Anzeigefläche 2 mit einer berührungsempfindlichen Oberfläche 5, auf welcher die gleichzeitige Berührung bei verschiedenen Bereichen detektierbar ist. Wie mit Bezug zu Fig. 1 beschrieben, handelt es sich somit bei der Bedieneinrichtung um einen Multi-Touchscreen.

Von der Anzeigefläche 2 kann, wie mit Bezug zu den Fig. 4A und 4B erläutert, eine Liste 8 mit Listenelementen 9 angezeigt werden oder, wie mit Bezug zu den Fig. 5A und 5B erläutert, eine geographische Karte 11 angezeigt werden. In den Fig. 6A bis 6C ist ein Beispiel einer Anzeige einer Liste 8 wiedergegeben.

Wie in Fig. 6A gezeigt, wird die Liste 8 zunächst mit einem Vergrößerungsfaktor wiedergegeben, bei dem fünf Listeneinträge 9 auf der Anzeigefläche 2 angezeigt werden. Der Nutzer kann durch einen Bedienvorgang die angezeigte Teilmenge verändern, indem er beispielsweise mit seiner Fingerspitze 17 die Anzeigefläche 2 bei der Liste 8 berührt und die Fingerspitze 17 daraufhin in einer bestimmten Richtung, insbesondere nach rechts oder. links auf der Anzeigefläche 2 bewegt. Beim Erzeugen dieses Bildlaufs bzw. dieses Scrollvorgangs mit nur einer Fingerspitze wird der Vergrößerungsfaktor der angezeigten Information nicht verändert.

Wenn der Nutzer die berührungsempfindliche Oberfläche 5 jedoch anstatt, wie in Fig. 6A gezeigt, mit nur einer Fingerspitze 17 berührt, sondern wie in Fig. 6B gezeigt, mit zwei Fingerspitzen 17 und 18 berührt, wird wie bei den vorhergehend beschriebenen Ausführungsbeispielen der Vergrößerungsfaktor der angezeigten Information verändert. Bei diesem Ausführungsbeispiel hängt jedoch die Größe der Veränderung des Vergrößerungsfaktors von der Anzeige der abgrenzbaren Bereiche oder der Größe des Bereichs ab, bei denen bzw. bei dem die berührungsempfindliche Oberfläche 5 der Anzeigefläche 2 gleichzeitig berührt wird. Wenn der Nutzer die berührungsempfindliche Oberfläche 5 mit zwei Fingerspitzen 17 und 18 berührt, ergeben sich entweder zwei voneinander abgrenzbare Bereiche, bei denen die berührungsempfindliche Oberfläche 5 der Anzeigefläche 2 berührt wird oder ein größerer Bereich, bei dem die Oberfläche 5 berührt wird.

Bei dem vorliegenden Ausführungsbeispiel wird der Vergrößerungsfaktor nicht verändert, wenn die berührungsempfindliche Oberfläche 5 nur mit einer Fingerspitze 17 berührt wird, der Vergrößerungsfaktor wird verkleinert, z. B. halbiert, wenn die berührungsempfindliche Oberfläche 5 mit zwei Fingerspitzen 17 und 18 berührt wird. Die Anzeige, die bei einem solchen Bedienvorgang, der durch zwei Fingerspitzen 17 und 18 ausgeführt wird, wiedergegeben wird, ist in Fig. 6B gezeigt.

Wird die berührungsempfindliche Oberfläche 5 mit noch mehr Fingerspitzen berührt, z. B. mit drei Fingerspitzen 17, 18 und 19, wie in Fig. 6C gezeigt, wird der Vergrößerungsfaktor nochmals verkleinert, beispielsweise nochmals halbiert im Vergleich zu dem Vergrößerungsfaktor bei der Berührung mit zwei Fingerspitzen 17 und 18. Die Anzeige für diesen Bedienvorgang, der mit drei Fingerspitzen 17, 18 und 19 ausgeführt wird, ist in Fig. 6C gezeigt.

Auf diese Weise kann der Nutzer mit geringem motorischen und zeitlichen Aufwand eine schnelle und kontrollierte Bewegung von virtuellen Objekten, wie Listen oder Karten, auf einem Multi-Touchscreen ausführen.

**BEZUGSZEICHENLISTE**

| | |
|---|---|
| 1 | Anzeigevorrichtung |
| 2 | Anzeigefläche |
| 3 | Steuervorrichtung |
| 4 | Speicher |
| 5 | berührungsempfindliche Oberfläche |
| 6 | Fahrzeugbus |
| 7 | mechanisches Bedienelement |
| 8 | Liste |
| 9 | Listeneintrag |

| 10 | Rahmen |
| 11 | geographische Karte |
| 12 | drucksensitive Oberfläche |
| 13-16 | Bedienelemente |
| 17-19 | Fingerspitzen |

## Patentansprüche

**1.** Verfahren zum Anzeigen von Information, bei dem

- auf einer Anzeigefläche (2) eine Teilmenge einer Gesamtinformation angezeigt wird, wobei die Größe der angezeigten Teilmenge von einem Vergrößerungsfaktor abhängt, mit dem die Teilmenge auf der Anzeigefläche angezeigt wird,
- wobei eine Oberfläche (5) der Anzeigefläche (2) berührungsempfindlich ist und
- wobei mit der berührungsempfindlichen Oberfläche (5) der Anzeigefläche (2) die gleichzeitige Berührung bei verschiedenen Bereichen detektierbar ist, und
- die angezeigte Teilmenge der Gesamtinformation durch einen Bedienvorgang eines Nutzers, bei dem die berührungsempfindliche Oberfläche (5) betätigt wird, verändert wird, wobei die Größe der Veränderung der angezeigten Information von dem Bedienvorgang und von dem Vergrößerungsfaktor der angezeigten Information abhängt,
- wobei sich der Vergrößerungsfaktor für den Bedienvorgang in Abhängigkeit von einer Bediensituation verändert, wobei die Bediensituation durch den Bedienvorgang bestimmt wird,

**dadurch gekennzeichnet,**

- **dass** der Bedienvorgang und/oder die von dem Bedienvorgang bestimmte Bediensituation eine auf der berührungsempfindlichen Oberfläche (5) ausgeführte Geste ist, bei der die Anzeigefläche (2) gleichzeitig bei zumindest zwei abgrenzbaren Bereichen berührt wird, und
- **dass** die Größe der Veränderung des Vergrößerungsfaktors von der Anzahl der abgrenzbaren Bereiche oder der Größe des Bereichs abhängt, bei denen bzw. bei dem die berührungsempfindliche Oberfläche (5) der Anzeigefläche (2) gleichzeitig bei dem Bedienvorgang und/oder der von dem Bedienvorgang bestimmten Bediensituation berührt wird.

**2.** Verfahren nach Anspruch 1,
**dadurch gekennzeichnet,**
**dass** während des Ausführens des Bedienvorgangs der Vergrößerungsfaktor der angezeigten Teilmenge verändert wird, so dass sich die Größe der von dem Bedienvorgang induzierten Veränderung der angezeigten Information verkleinert oder vergrößert.

**3.** Verfahren nach Anspruch 1 oder 2,
**dadurch gekennzeichnet,**
**dass** die Gesamtinformation eine Liste (8) mit einer Vielzahl von Listeneinträgen (9) ist, von denen nur eine Teilmenge angezeigt wird, und dass die Anzahl der Listeneinträge (9) der Teilmenge von dem Vergrößerungsfaktor abhängt.

**4.** Verfahren nach Anspruch 3,
**dadurch gekennzeichnet,**
**dass** mittels des Bedienvorgangs ein Bildlauf durch die Listeneinträge (9) erzeugt wird und
**dass** bei einer Verkleinerung des Vergrößerungsfaktors während des von dem Bedienvorgang induzierten Bildlaufs eine größere Menge von Listeneinträgen (9) angezeigt wird, so dass eine schnellerer Bildlauf erzeugt wird.

**5.** Verfahren nach Anspruch 1 oder 2,
**dadurch gekennzeichnet,**
**dass** die Gesamtinformation eine geographische Karte darstellt, von der nur ein Teilbereich angezeigt wird, und dass der Kartenmaßstab vom Vergrößerungsfaktor abhängt.

**6.** Verfahren nach Anspruch 5,
**dadurch gekennzeichnet,**

**dass** mittels des Bedienvorgangs ein Kartenausschnitt verändert wird und dass bei einer Verkleinerung des Vergrößerungsfaktors während der von dem Bedienvorgang induzierten Veränderung des Kartenausschnitts die Karteninformation in einem Ausschnitt mit gleicher Abmessung, jedoch in einem kleineren Kartenmaßstab angezeigt wird, so dass der Kartenausschnitt schneller über die Gesamtinformation der geographischen Karte bewegt wird.

**7.** Verfahren nach einem der vorhergehenden Ansprüche,
**dadurch gekennzeichnet,**
**dass** bei Beendigung des Bedienvorgangs der Vergrößerungsfaktor wieder auf den ursprünglichen Wert zurückgesetzt wird.

**8.** Verfahren nach Anspruch 1,
**dadurch gekennzeichnet,**
**dass** bei dem Bedienvorgang die berührungsempfindliche Oberfläche (5) der Anzeigefläche (2) oder der Bedieneinrichtung gleichzeitig bei zwei Bereichen berührt wird, die zum Vergrößern des Vergrößerungsfaktors voneinander weg bewegt werden und die zum Verkleinern des Vergrößerungsfaktors aufeinander zu bewegt werden.

**9.** Verfahren nach Anspruch 1,
**dadurch gekennzeichnet,**
**dass** die Bediensituation von einem Bedienvorgang bestimmt wird, bei dem die berührungsempfindliche Oberfläche (5) der Anzeigefläche (2) oder der Bedieneinrichtung zum Verkleinern des Vergrößerungsfaktors gleichzeitig bei zwei Bereichen berührt wird, und beim Bedienvorgang zum Verändern der angezeigten Teilmenge der Gesamtinformation die Bereiche verschoben werden.

**10.** Verfahren nach einem der vorhergehenden Ansprüche,
**dadurch gekennzeichnet,**
**dass** die Bediensituation von einem Bedienvorgang bestimmt wird, bei dem eine schnelle Bewegung über die berührungsempfindliche Oberfläche (5) der Anzeigefläche (2) ausgeführt wird.

**11.** Vorrichtung zum Anzeigen von Information mit

- einer Anzeigevorrichtung (1) mit einer Anzeigefläche (2),
- einem Speicher (4) zum Speichern einer Gesamtinformation, von der eine Teilmenge auf der Anzeigefläche (2) anzeigbar ist, wobei die Größe der anzeigbaren Teilmenge von einem Vergrößerungsfaktor abhängt, mit dem die Teilmenge auf der Anzeigefläche (2) angezeigt wird, und
- einer Bedieneinrichtung (3, 5), die von einem Nutzer betätigbar ist, um die angezeigte Teilmenge der Gesamtinformation durch einen Bedienvorgang zu verändern, wobei die Bedieneinrichtung (3, 5) eine berührungsempfindlichen Oberfläche (5) umfasst, mit der die gleichzeitige Berührung bei verschiedenen Bereichen detektierbar ist, und wobei die Größe der Veränderung der angezeigten Information von dem Bedienvorgang und von dem Vergrößerungsfaktor der angezeigten Information abhängt, und
- wobei die Anzeige auf der Anzeigefläche (2) so steuerbar ist, dass sich der Vergrößerungsfaktor für den Bedienvorgang in Abhängigkeit von einer Bediensituation verändert, wobei die Bediensituation durch den Bedienvorgang bestimmt wird,

**dadurch gekennzeichnet,**

- **dass** die Anzeige auf der Anzeigefläche (2) so steuerbar ist, dass der Bedienvorgang und/oder die von dem Bedienvorgang bestimmte Bediensituation eine auf der berührungsempfindlichen Oberfläche (5) ausgeführte Geste ist, bei der die Anzeigefläche (2) gleichzeitig bei zumindest zwei abgrenzbaren Bereichen berührt wird, und
- **dass** die Größe der Veränderung des Vergrößerungsfaktors von der Anzahl der abgrenzbaren Bereiche oder der Größe des Bereichs abhängt, bei denen bzw. bei dem die berührungsempfindliche Oberfläche (5) der Anzeigefläche (2) gleichzeitig bei dem Bedienvorgang und/oder der von dem Bedienvorgang bestimmten Bediensituation berührt wird.

**12.** Vorrichtung nach Anspruch 11,
**dadurch gekennzeichnet,**
**dass** während des Ausführens des Bedienvorgangs der Vergrößerungsfaktor der angezeigten Teilmenge veränderbar ist, so dass sich die Größe der von dem Bedienvorgang induzierten Veränderung der angezeigten Information verkleinert oder vergrößert.

**13.** Vorrichtung nach Anspruch 11 oder 12,
**dadurch gekennzeichnet,**
**dass** die Gesamtinformation eine Liste (8) mit einer Vielzahl von Listeneinträgen (9) ist, von denen nur eine Teilmenge anzeigbar ist, und dass die Anzahl der Listeneinträge (9) der Teilmenge von dem Vergrößerungsfaktor abhängt.

**14.** Vorrichtung nach Anspruch 11 oder 12,
**dadurch gekennzeichnet,**
**dass** die Gesamtinformation eine geographische Karte (11) darstellt, von der nur ein Teilbereich anzeigbar ist, und dass der Kartenmaßstab vom Vergrößerungsfaktor abhängt.


**Claims**

**1.** Method for displaying information, in which

- a display panel (2) is used to display a subset of a total information item, wherein the magnitude of the displayed subset is dependent on a magnification factor which is used to display the subset on the display panel,
- wherein a surface (5) of the display panel (2) is touch-sensitive, and
- wherein the touch-sensitive surface (5) of the display panel (2) can be used to detect the simultaneous touching of different areas, and
- the displayed subset of the total information is altered by an operator control process from a user which involves the touch-sensitive surface (5) being operated, the magnitude of the alteration of the displayed information being dependent on the operator control process and on the magnification factor of the displayed information,
- the magnification factor is altered for the operator control process on the basis of an operator control situation, the operator control situation being determined by the operator control process,

**characterized**

- **in that** the operator control process and/or the operator control situation determined by the operator control process is/are a gesture formed on the touch-sensitive surface (5) which involves the display panel (2) being touched simultaneously on at least two delimitable areas, and
- **in that** the magnitude of the alteration of the magnification factor is dependent on the number of delimitable areas, or the magnitude of the areas, on which the touch-sensitive surface (5) of the display panel (2) is touched simultaneously during the operator control process and/or the operator control situation determined by the operator control process.

**2.** Method according to Claim 1,
**characterized**
**in that** while the operator control process is being performed the magnification factor of the displayed subset is altered, with the result that the magnitude of the alteration of the displayed information which is induced by the operator control process is reduced or increased.

**3.** Method according to Claim 1 or 2,
**characterized**
**in that** the total information is a list (8) having a multiplicity of list entries (9), only a subset of which is displayed, and in that the number of list entries (9) in the subset is dependent on the magnification factor.

**4.** Method according to Claim 3,
**characterized**
**in that** the operator control process is used to produce scrolling through the list entries (9), and
**in that** when the magnification factor is reduced during the scrolling induced by the operator control process a larger set of list entries (9) is displayed, with the result that faster scrolling is produced.

**5.** Method according to Claim 1 or 2,
**characterized**
**in that** the total information is a geographical map, of which only a subregion is displayed, and in that the map scale is dependent on the magnification factor.

**6.** Method according to Claim 5,
**characterized**
**in that** the operator control process is used to alter a map detail and
**in that** when the magnification factor is reduced during the alteration of the map detail which is induced by the operator control process the map information is displayed in a detail having the same dimension, but on a smaller map scale, with the result that the map detail is moved more quickly over the total information from the geographical map.

**7.** Method according to one of the preceding claims,
**characterized**
**in that** upon termination of the operator control process the magnification factor is reset to the original value again.

**8.** Method according to Claim 1,
**characterized**
**in that** during the operator control process the touch-sensitive surface (5) of the display panel (2) or of the operator control device is touched simultaneously on two areas which are moved away from one another in order to increase the magnification factor and which are moved towards one another in order to reduce the magnification factor.

**9.** Method according to Claim 1,
**characterized**
**in that** the operator control situation is determined by an operator control process in which the touch-sensitive surface (5) of the display panel (2) or of the operator control device is touched simultaneously on two areas in order to reduce the magnification factor, and the operator control process involves the displayed subset of the total information being altered by virtue of the areas being displaced.

**10.** Method according to one of the preceding claims,
**characterized**
**in that** the operator control situation is determined by an operator control process in which a rapid movement is performed over the touch-sensitive surface (5) of the display panel (2).

**11.** Apparatus for displaying information having

- a display apparatus (1) having a display panel (2),
- a memory (4) for storing a total information item, a subset of which can be displayed on the display panel (2), wherein the magnitude of the displayable subset is dependent on a magnification factor which is used to display the subset on the display panel (2), and
- an operator control device (3, 5) which can be operated by a user in order to alter the displayed subset of the total information by virtue of an operator control process, wherein the operator control device (3, 5) comprises a touch-sensitive surface (5) which can be used to detect the simultaneous touching of different areas, and wherein the magnitude of the alteration of the displayed information is dependent on the operator control process and on the magnification factor of the displayed information, and
- wherein the display on the display panel (2) can be controlled such that the magnification factor is altered for the operator control process on the basis of an operator control situation, the operator control situation being determined by the operator control process,

**characterized**

- **in that** the display on the display panel (2) can be controlled such that the operator control process and/or the operator control situation determined by the operator control process is/are a gesture performed on the touch-sensitive surface (5) which involves the display panel (2) being touched simultaneously on at least two delimitable areas, and
- **in that** the magnitude of the alteration of the magnification factor is dependent on the number of delimitable areas, or the magnitude of the area, on which the touch-sensitive surface (5) of the display panel (2) is touched simultaneously during the operator control process and/or the operator control situation determined by the operator control process.

**12.** Apparatus according to Claim 11,
**characterized**

**in that** while the operator control process is being performed the magnification factor of the displayed subset can be altered, with the result that the magnitude of the alteration of the displayed information which is induced by the operator control process is reduced or increased.

13. Apparatus according to Claim 11 or 12,
**characterized**
**in that** the total information is a list (8) having a multiplicity of list entries (9), only a subset of which can be displayed, and in that the number of list entries (9) in the subset is dependent on the magnification factor.

14. Apparatus according to Claim 11 or 12,
**characterized**
**in that** the total information is a geographical map (11), of which only a subregion can be displayed, and in that the map scale is dependent on the magnification factor.

**Revendications**

1.  Procédé d'affichage d'informations, dans lequel :

    une quantité partielle parmi la totalité d'informations est affichée sur une surface d'affichage (2), l'ordre de grandeur de la quantité partielle affichée dépendant d'un facteur de grossissement utilisé pour l'affichage de la quantité partielle sur la surface d'affichage ;
    une surface (5) de la surface d'affichage (2) étant tactile ; et
    l'effleurement simultané de différentes zones pouvant être détecté à l'aide de la surface tactile (5) de la surface d'affichage (2) ; et
    la quantité partielle affichée parmi la totalité d'informations pouvant être modifiée par le biais d'un processus d'utilisation d'un utilisateur au cours duquel la surface tactile (5) est actionnée, l'ordre de grandeur de la modification des informations affichées dépendant du processus d'utilisation et du facteur de grossissement des informations affichées ;
    le facteur de grossissement du processus d'utilisation étant modifié en fonction d'une situation d'utilisation, la situation d'utilisation étant déterminée par le processus d'utilisation ;

    **caractérisé en ce que** :

    le processus d'utilisation et/ou la situation d'utilisation définie par le processus d'utilisation est un geste réalisé sur la surface tactile (5) au cours duquel la surface d'affichage (2) est simultanément effleurée au niveau d'au moins deux zones connexes ;
    l'ordre de grandeur de la modification du facteur de grossissement dépendant du nombre de zones connexes ou de l'ordre de grandeur de la zone au niveau de laquelle et/ou desquelles la surface tactile (5) de la surface d'affichage (2) est simultanément effleurée au cours du processus d'utilisation et/ou de la situation d'utilisation définie par le processus d'utilisation.

2.  Procédé selon la revendication 1, **caractérisé en ce que** le facteur de grossissement de la quantité partielle affichée est modifié pendant la mise en oeuvre du processus d'utilisation, de sorte que l'ordre de grandeur de la modification des informations affichées induite par le processus d'utilisation est réduit ou augmenté.

3.  Procédé selon la revendication 1 ou 2, **caractérisé en ce que** la totalité d'informations correspond à une liste (8) comprenant une pluralité d'entrées de liste (9) parmi lesquelles seule une quantité partielle est affichée et que le nombre d'entrées de liste (9) de la quantité partielle dépend du facteur de grossissement.

4.  Procédé selon la revendication 3, **caractérisé en ce que** :

    un défilement des entrées de liste (9) se produit pendant le processus d'utilisation ;
    une quantité plus importante d'entrées de liste (9) est affichée en cas de réduction du facteur de grossissement pendant l'utilisation du défilement induit par le processus d'utilisation, de sorte qu'un défilement se produit plus rapidement.

5.  Procédé selon la revendication 1 ou 2, **caractérisé en ce que** la totalité d'informations représente une carte géographique dont seule une zone partielle est affichée et que l'échelle de la carte dépend du facteur de grossissement.

6. Procédé selon la revendication 5, **caractérisé en ce qu'**une section de carte est modifiée par le biais du processus d'utilisation et qu'en cas de réduction du facteur de grossissement pendant la modification de la section de carte induite par le processus d'utilisation, les informations cartographiques sont affichées dans une section de même dimension, toutefois à une échelle de carte plus petite, de sorte que la section de carte est déplacée plus rapidement sur la totalité d'informations de la carte géographique.

7. Procédé selon l'une quelconque des revendications précédentes, **caractérisé en ce qu'**à la fin du processus d'utilisation, le facteur de grossissement est ramené à la valeur de départ.

8. Procédé selon la revendication 1, **caractérisé en ce que** dans le cadre du processus d'utilisation, la surface tactile (5) de la surface d'affichage (2) ou du dispositif de commande sont simultanément effleurées en éloignant deux zones l'une par rapport à l'autre pour réduire le facteur de grossissement et en les rapprochant pour augmenter le facteur de grossissement.

9. Procédé selon la revendication 1, **caractérisé en ce que** la situation d'utilisation est définie par un processus d'utilisation au cours duquel la surface tactile (5) de la surface d'affichage (2) ou du dispositif de commande sont effleurées simultanément au niveau de deux zones pour réduire le facteur de grossissement et les zones étant déplacées lors du processus d'utilisation pour déplacer la quantité partielle affichée parmi la totalité d'informations.

10. Procédé selon l'une quelconque des revendications précédentes, **caractérisé en ce que** la situation d'utilisation est déterminée par un processus d'utilisation au cours duquel un mouvement rapide est réalisé sur l'ensemble de la surface tactile (5) de la surface d'affichage (2).

11. Dispositif d'affichage d'informations doté de :

   un dispositif d'affichage (1) pourvu d'une surface d'affichage (2) ;
   une mémoire (4) servant à mémoriser la totalité d'informations parmi lesquelles une quantité partielle peut être affichée sur la surface d'affichage (2), l'ordre de grandeur de la quantité partielle pouvant être affichée dépendant d'un facteur de grossissement définissant la quantité partielle affichée sur la surface d'affichage (2) ; et
   un dispositif de commande (3, 5) pouvant être actionné par un utilisateur afin de modifier la quantité partielle affichée parmi la totalité d'informations par le biais d'un processus d'utilisation, le dispositif de commande (3, 5) comprenant une surface tactile (5) permettant de détecter l'effleurement simultané de différentes zones et l'ordre de grandeur de la modification des informations affichées dépendant du processus d'utilisation et du facteur de grossissement des informations affichées ; et
   l'affichage apparaissant sur la surface d'affichage (2) pouvant être commandé de façon à ce que le facteur de grossissement soit modifié pour le processus d'utilisation en fonction d'une situation d'utilisation, la situation d'utilisation étant définie par le processus d'utilisation ;

   **caractérisé en ce que** :

   l'affichage apparaissant sur la surface d'affichage (2) peut être commandé de telle sorte que le processus d'utilisation et/ou la situation d'utilisation déterminée par le processus d'utilisation correspond à un geste réalisé sur la surface tactile (5) au cours duquel la surface d'affichage (2) est simultanément effleurée au niveau d'au moins deux zones connexes ; et l'ordre de grandeur de la modification du facteur de grossissement dépendant du nombre de zones connexes ou de l'ordre de grandeur de la zone au niveau de laquelle et/ou desquelles la surface tactile (5) de la surface d'affichage (2) est simultanément effleurée au cours du processus d'utilisation et/ou de la situation d'utilisation définie par le processus d'utilisation.

12. Dispositif selon la revendication 11, **caractérisé en ce que** le facteur de grossissement de la quantité partielle affichée peut être modifié pendant la mise en oeuvre du processus d'utilisation, de sorte que l'ordre de grandeur de la modification des informations affichées induite par le processus d'utilisation est réduit ou augmenté.

13. Dispositif selon la revendication 11 ou 12, **caractérisé en ce que** la totalité d'informations correspond à une liste (8) comprenant une pluralité d'entrées de liste (9) parmi lesquelles seule une quantité partielle peut être affichée et que le nombre d'entrées de liste (9) de la quantité partielle dépend du facteur de grossissement.

**14.** Dispositif selon la revendication 11 ou 12, **caractérisé en ce que** la totalité d'informations représente une carte géographique (11) dont seule une zone partielle peut être affichée et que l'échelle de la carte dépend du facteur de grossissement.

FIG. 1

1

2

3

4

7

6

**FIG. 2**

14

13

15

16

12

**FIG. 3**

1.  Aaaa aaaa aaaa
2.  Bbbb bbbb bbbb
3.  Cccc cccc cccc
4.  Dddd dddd dddd
5.  Eeee eeee eeee
6.  Ffff ffff ffff ffff

8

2

9

9

## FIG. 4A

3.   Cccc cccc cccc
4.   Dddd dddd dddd
5.   Eeee eeee eeee
6.   Ffff ffff ffff ffff
7.   Gggg gggg gggg
8.   Hhhh hhhh hhhh
9.   Iiii iiii iiii iiii
10.  Jjjj jjjj jjjj jjjj
11.  Kkkk kkkk kkkk
12.  Llll llll llll llll
13.  Mmmm mmmm mmmm
14.  Nnnn nnnn nnnn nnnn

8

2

9

10

9

## FIG. 4B

FIG. 5A

FIG. 5B

FIG. 6A

FIG. 6B

FIG. 6C

EP 2 331 360 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006032118 A1
- DE 19941956 A1
- DE 19941960 A1
- EP 0366132 B1
- DE 19944324
- DE 10324579 A1
- DE 102005020155 A1
- US 2004160458 A1
- EP 1840715 A2